# EUROPEAN PATENT APPLICATION

(11) **EP 2 863 494 A1**
(43) Date of publication of application: **22.04.2015**
(21) Application number: 14188862.8
(22) Date of filing: 14.10.2014
(51) Int. Cl.: H01R 39/20, B64D 15/12

(54) **Brush design for propeller deicing system**

(30) Priority: 15.10.2013 US 201314054143
(71) Applicant: Hamilton Sundstrand Corporation, Windsor Locks, CT 06096-1010 (US)
(72) Inventor: Gao, Chang Cheng, Winchester, MA Massachusetts 01890 (US)
(74) Representative: Gittins, Alex Michael

(57) **Abstract**

A brush (46) configured to engage a rotating component to transfer an electrical signal and/or power is provided including a body formed from a core material (70). A coating material (72) is disposed over a portion of the body configured to contact the rotating component. A contact area between the brush (46) and the rotating component increases as the coating material (72) wears.

## Description

### BACKGROUND OF THE INVENTION

Embodiments of the invention relate to aircraft propeller deicing systems, and more particularly, to brush block assemblies for use in propeller deicing systems.

Propeller deicing systems are used to prevent ice build-up on an aircraft's propeller blades. The most common type of deicing system uses resistive heating elements, such as in the form of flexible strips for example, which are disposed along a section of the blade's leading edge closest to the hub assembly. The application of electrical current to the heaters weakens the bond between accumulated ice and the airfoil surface allowing the ice to be "thrown off" by the centrifugal forces generated by rotation of the propeller.

An aircraft power source located on the non-rotating side of the propeller-engine interface provides electrical current to the brushes and through a rotating interface. The interface includes stationary, electrically conductive brushes which are in electrical contact with a conductive slip ring mounted to the rear of the rotating propeller's spinner assembly. Conventional slip rings are large in size, generally between two feet and three feet in diameter, and therefore require a significant amount of space within the propeller assembly. In addition, contact between the brushes and the conductive slip ring causes the ends of the brushes to wear unevenly. This uneven wear reduces the contact area between the brushes and the slip ring and therefore reduces the amount of electrical power that can be transmitted through the interface.

### BRIEF DESCRIPTION OF THE INVENTION

According to one embodiment of the invention, a brush configured to engage a rotating component to transfer an electrical signal and/or power to the rotating component is provided including a body formed from a core material. The body includes a portion configured to engage the rotating component. A coating material is disposed over the portion of the body configured to contact the rotating component. A contact area between the brush and the rotating component increases as the coating material wears due to operation of the rotating component.

According to another embodiment of the invention, an assembly for transferring electrical power from a stationary component to a rotating component is provided including a shaft configured to rotate about a shaft axis. A slip ring assembly is mounted concentrically about the shaft, the slip ring assembly including a slip ring mounted to a plate face of a slip ring plate. A brush assembly including a brush has a first portion configured to contact the slip ring. A coating material is disposed over the first portion such that a contact area between the brush and the slip ring increases as the coating material wears due to rotation of the slip ring assembly.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic view of an embodiment of a propeller system of an aircraft;
FIG. 2 is a partially cut away side view of a slip ring arrangement of a propeller system according to an embodiment of the invention;
FIG. 3 is a cross-sectional view of another slip ring arrangement of a propeller system according to an embodiment of the invention;
FIG. 4 is an end view of a brush block according to an embodiment of the invention;
FIG. 5 is a cross-sectional view of a brush block engaged with a slip ring according to an embodiment of the invention and;
FIG. 6 is a cross-sectional view of another brush block engaged with a slip ring according to an embodiment of the invention.

The detailed description explains embodiments of the invention, together with advantages and features, by way of example with reference to the drawings.

### DETAILED DESCRIPTION OF THE INVENTION

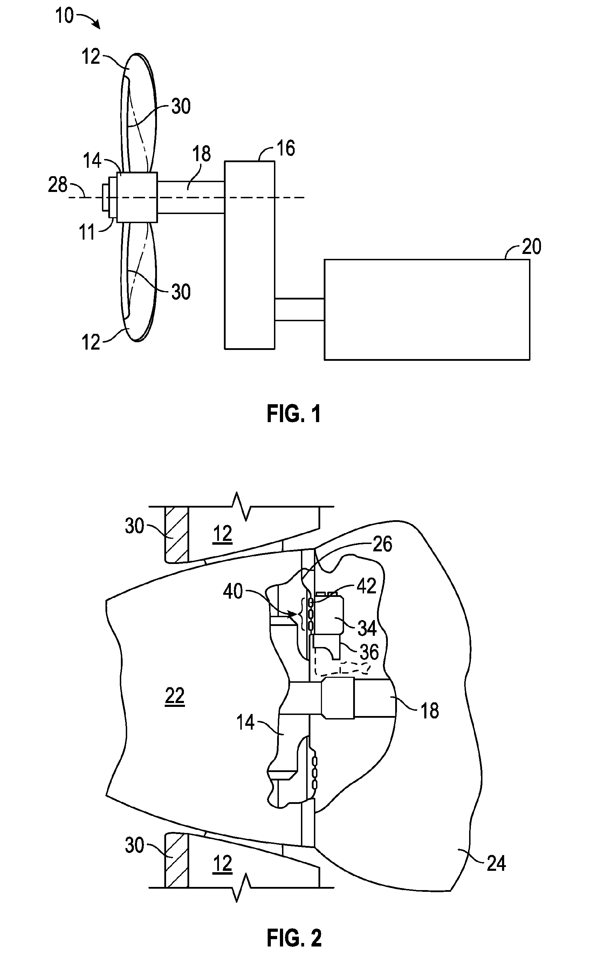

Shown in FIG. 1 is schematic view of an embodiment of a propeller system 10 for an aircraft. The propeller system 10 includes a propeller assembly having a plurality of propeller blades 12 arranged around a hub 14. A pitch change actuator 11 is connected to an end of the hub 14. The propeller blades 12 include one or more heating elements 30 for deicing of the propeller blades 12. The propeller system 10 is operably connected to a reduction gearbox 16 via a propeller shaft 18, which is in turn connected to an engine 20.

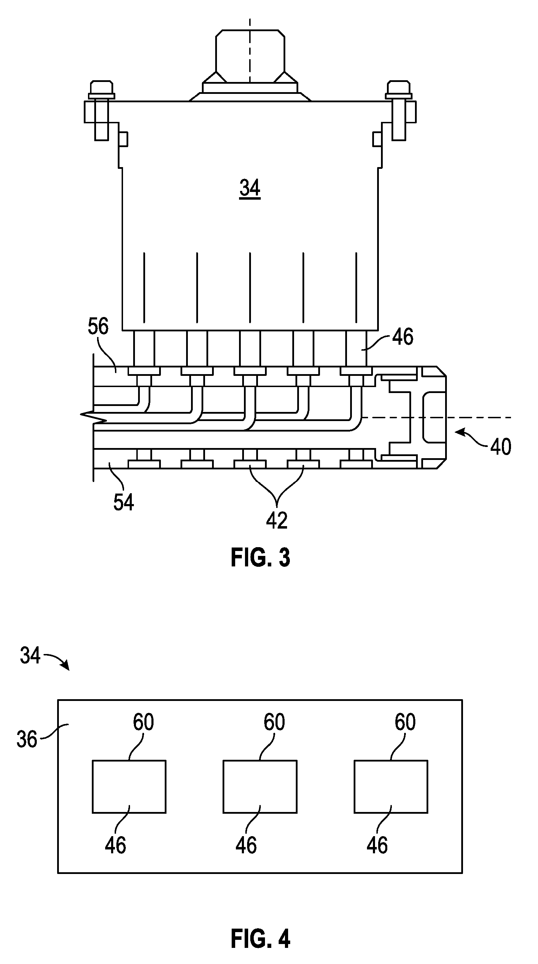

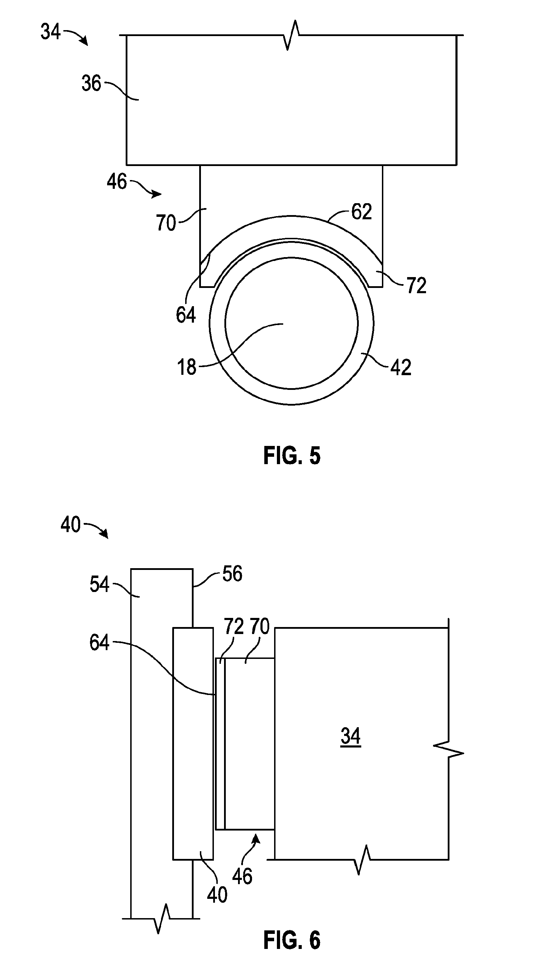

Referring now to FIG. 2, a spinner 22 encloses the hub 14 which mechanically secures each of the plurality of propeller blades 12 to the propeller shaft 18. The rearward interior portion of the spinner 22, facing the engine cowling 24, includes a bulk head 26. The bulk head 26 is both substantially flat and substantially annular in its geometry, and includes a center hole through which the propeller shaft 18 connects to the hub 14. The exposed surface of the bulk head 26 includes a slip ring assembly 40. Typically, a portion of the bulkhead 26 includes a slip ring plate 54 (see FIG. 3) having a molded plastic composition configured to receive slip rings 42 (see FIG 6). The slip rings 42 are molded into or assembled to a plate face of the slip ring plate 54. The slip ring plate 54 is concentric with the propeller shaft 18, rearward of the hub 14.

A brush block 34 is located adjacent the bulkhead and is at least partially supported by and enclosed in a brush block housing 36. The brush block 34 includes a number of brushes 46, which interface with the slip rings 42 (see FIG. 6). The brush block 34 receives electrical power from a power source, such as a generator (not shown) for example, and transfers the electrical power to the slip rings 42 via the brush block tips 46. In the embodiment of FIG. 2, the brushes 46 extend substantially axially relative to the shaft axis 28 toward the slip rings 42. The brushes 46 may be shimmed into a selected location relative to the slip rings 42. A number of lead wires (not shown) extend from the slip rings 42 to the plurality of heating elements 30 mounted to the propeller blades 18.

In another embodiment, illustrated in FIG. 3, the slip ring plate 54 is a generally cylindrical tube, similar to a sleeve, concentric with and secured to the propeller shaft 18, rearward of the gearbox 16. The at least one slip ring 42 of the slip ring assembly 40 is molded into or assembled about the circumference of the plate face 56 such that the brushes 46 form an interface with the slip rings 42 as the shaft 18 rotates about a shaft axis 28. Although particular slip ring assemblies 40 configured for use in a propeller assembly 10 are illustrated and described in the disclosed nonlimiting embodiments, slip rings assemblies having other configurations or used in other applications outside of aircrafts are within the scope of the invention.

Referring now to FIGS. 4, an example of a brush block 34 is illustrated in more detail. The brush block 34 includes an injection molded housing 36 have a plurality of brush pockets or chambers 60. In one embodiment, the brush pockets 60 are generally arranged in a column or row. The geometry of the housing 36 is determined by the particular engine and/or aircraft model type so as to provide secure mounting of the brush block 34. The plurality of electrically conductive brushes 46 are slidably received within the plurality of brush pockets 60 formed in the housing 36. The brushes 46 are shown having a generally rectangular cross-section, but other cross-sectional shapes are within the scope of the invention. Biasing means (not shown) are provided for urging an exposed end 62 of each brush 46 into contact with a surface of an adjacent slip ring 42. Thus, the brushes 46 and the slip rings 42 form a plurality of sliding contacts. Electrical power is conducted from the brushes 46, through the plurality of sliding contacts to the rotating slip ring 40.

With reference to the configuration illustrated in FIGS. 2 and 6, the slip rings 42 are substantially flat, circular plates. The exposed ends 62 of the brushes 46 are similarly flat to maximize contact with the flat surface of the slip rings 42. In system of other configurations, as shown in the embodiment illustrated in FIG. 5, the brush block 34 is mounted generally perpendicular to the propeller shaft 18 such that the exposed ends 62 of the brushes 46 are configured to engage the outer diameter of the slip ring 42. To increase the contact area between the brushes 46 and the slip rings 42, the exposed end 62 of each brush 46 includes a radial cut, generally complementary to the curvature of the slip ring 42. Though certain brush designs are illustrated and described herein, other configurations are within the scope of the invention.

Referring now to both FIG. 5 and 6, each brush 46 comprises a core material 70 and a coating material 72. The core material 70 substantially forms the body of the brush 46 and may be any conductive material, such as carbon, graphite, or some combination thereof for example. The coating material 72 is generally a thin layer of a soft, conductive material uniformly applied over at least a portion of the surface 64 of the brush 46 configured to engage the slip ring 42. In one embodiment, the coating material 72 is configured to wear more quickly than the core material 70 to improve the contact formed between the brush 46 and the slip ring 42. Exemplary coating materials 72 include, but are not limited to, soft nickel, copper, carbon, and a silver containing conductive compound or paint for example. The coating material 72 and the core material 70 may be integrally formed during manufacturing, such as through a single step injection molding process for example. Alternatively, the body of the brush 46 may be formed from the core material 70 first, and the coating material 72 may be applied in a separate process afterwards, such as with a spray for example.

Initial engagement of the slip ring 42 and brushes 46 will result in wear of a portion of the coating material 72 of each brush 46. As the coating material 72 wears, the conformity between the slip ring 42 and the exposed end 62 of the brush 46 generally improves. By selecting a soft coating material, the time required to achieve a desired contact area between the slip ring 42 and each of the brushes 46 is reduced. As a result of this increased surface contact at each of the plurality of sliding contacts, additional power can be delivered to the heating elements 30.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A brush configured to engage a rotating component to transfer an electrical signal and/or power to the rotating component, comprising:
a body formed from a core material (70) and including a portion configured to contact the rotating component; and
a coating material (72) disposed over the portion of the body configured to contact the rotating component, wherein a contact area between the brush (46) and the rotating component increases as the coating material (72) wears due to operation of the rotating component.

2. The brush according to claim 1, wherein an end of the brush (46) is configured to contact an outer diameter of the rotating component.

3. The brush according to claim 1, wherein the portion of the body configured to contact the rotating component includes a radial cut.

4. The brush according to claim 3, wherein the radial cut is generally complementary to a curvature of the rotating component.

5. The brush according to any preceding claim, wherein the end of the body configured to contact the rotating component is substantially flat.

6. The brush according to any preceding claim, wherein the core material and the coating material are integrally formed.

7. The brush according to any preceding claim, wherein the coating material is configured to wear faster than the core material.

8. An assembly for transferring electrical power from a stationary component to a rotating component, comprising:
a shaft (18) configured to rotate about a shaft axis (28);
a slip ring assembly (40) mounted concentrically about the shaft (18), the slip ring assembly including a slip ring (42) mounted to a plate face of a slip ring plate (54); and
a brush assembly (34) including a brush (46) including a first portion configured to contact the slip ring, a coating material (72) disposed over the first portion such that a contact area between the brush (46) and the slip ring (42) increases as the coating material (72) wears due to rotation of the slip ring assembly (40).

9. The assembly according to claim 8, wherein the first portion of the brush (46) includes a radial cut complementary to a curvature of the slip ring assembly (40).

10. The assembly according to claim 8 or 9, wherein the coating material (72) is at least one of soft nickel, copper, carbon, and a silver containing conductive compound or paint.

11. The assembly according to claim 8, 9 or 10, wherein the brush (46) generally includes a core material (70).

12. The assembly according to claim 11, wherein the core material (70) and the coating material (72) are integrally formed.

13. The assembly according to claim 11 or 12, wherein the coating material (72) is configured to wear faster than the core material (70).

14. The assembly according to any of claims 8 to 13, wherein the shaft (18) is connected to a hub (14) configured to support a plurality of propeller blades (12), each of the propeller blades (12) including a heating element (30).

15. The assembly according to claim 14, wherein the slip ring assembly (40) is configured to provide power to the heating elements (30).
